Europäisches Patentamt

European Patent Office

Office européen des brevets

(11) Veröffentlichungsnummer: **0 316 276**
**A1**

## (12) EUROPÄISCHE PATENTANMELDUNG

(21) Anmeldenummer: **88810745.5**

(22) Anmeldetag: **02.11.88**

(51) Int. Cl.⁴: **B 60 B 1/04**
**B 60 B 1/14**

(30) Priorität: **11.11.87 CH 4396/87**

(43) Veröffentlichungstag der Anmeldung:
**17.05.89 Patentblatt 89/20**

(84) Benannte Vertragsstaaten: **AT CH DE FR LI**

(71) Anmelder: **Krampera, Jiri**
**Bertastrasse 34**
**CH-8003 Zürich (CH)**

(72) Erfinder: **Krampera, Jiri**
**Bertastrasse 34**
**CH-8003 Zürich (CH)**

(74) Vertreter: **Feldmann, Paul David et al**
**c/o Patentanwaltsbüro FELDMANN AG Kanalstrasse 17**
**CH-8152 Glattbrugg (CH)**

(54) **Drahtspeichenrad für Fahrräder und ähnliche Fahrzeuge.**

(57) Um bei einem Drahtspeichenrad eine vorteilhafte einseitige Verankerung der konventionell geformten Speichen (S) in einem konventionellen Nabenflansch (62) zu ermöglichen, sind in einem Speichenpaar Speichen (S48, S39) von unterschiedlicher Länge eingebaut, welche gleichzeitig genügend lange Hebelarme (H5, H6) bieten. Dabei verläuft die längere Speiche (S39) von ihrem Flanschloch (9) in Richtung zur Felge hin zwischen den Flanschlöchern (8, 7, 6) einerseits und dem Mittelpunkt des Flanschlochkreises (L) andrerseits im Innern des Flanschlochkreises (L). Beide Speichen (S48, S39) werden dadurch nirgends stark verbogen und der wichtige Kontakt zum Flansch (62) in ihren Flanschlöchern (18, 9) ist gewährleistet.

Fig. 6

EP 0 316 276 A1

**Beschreibung**

## DRAHTSPEICHENRAD FUER FAHRRAEDER UND AEHNLICHE FAHRZEUGE

Die Erfindung betrifft ein Drahtspeichenrad für Fahrräder und ähnliche Fahrzeuge.

Ein konventionelles Drahtspeichenrad ist zusammengesetzt aus einer Nabe mit einem Nabenkörper, welcher sich um die Radachse mit Hilfe von Kugellagern drehen kann und welcher an beiden Enden mit Flanschen versehen ist. Diese Flansche weisen eine Mehrzahl von Flanschlöchern auf, deren Richtung im allgemeinen parallel zur erwähnten Radachse verläuft und welche um diese Achse in einem konzentrischen Kreis angeordnet sind. In diesen Flanschlöchern sind Drahtspeichen verankert, welche bei der Verankerung im Flansch ungefähr um 90 Grad abgewinkelt sind und am Ende dieser Biegung einen Kopf haben, der einen grösseren Durchmesser hat als die Speiche. Alle Speichen in einem Flansch haben die gleiche Länge und werden in die Flanschlöcher abwechslungsweise von innen und von aussen gesteckt. Das andere Ende der Speichen ist gerade ausgebildet und mit einem Gewinde versehen, an welchem Speichennippel drehbar angeordnet sind, welche die Speichen mit der Felge verbinden.

Seit der Entstehung des Drahtspeichenrades wurden verschiedene Speichenspannsysteme entwickelt und praktisch angewandt. Der in der Fahrradtechnik bekannte Begriff des "Speichenpaares" bezeichnet zwei Speichen, welche aus einem Nabenflansch herauskommen, sich in der Seitenansicht des Rades kreuzen und in zwei aufeinander folgenden Felgenlöchern der gleichen Felgenseite enden. Zwischen ihren Felgenlöchern in der Felge gibt es immer ein Felgenloch in der anderen Felgenseite, wo eine vom anderen Nabenflansch kommende Speiche endet, weil die Felgenlöcher der einzelnen Felgenseiten in der Umfangsrichtung der Felge abwechslungsweise angeordnet sind. Je nach Art des Spannsystemes ergibt sich im Nabenflansch zwischen den zu einem Speichenpaar gehörenden Flanschlöchern eine Anzahl Zwischenlöcher, die anderen Speichenpaaren zugeordnet sind. Je nach Anzahl dieser Zwischenlöcher ergibt sich auch die Anzahl der Kreuzungen jeder Speiche mit anderen Speichen auf ihrer gesamten Länge und die Länge der zu den Speichen gehörenden Hebelarme.

Die heute bekannten Spannsysteme, welche die genannten Merkmale eines Speichenpaares nicht aufweisen, finden ihre Anwendung nur selten. Die sogenannten Radialspeichen, welche sich gar nicht kreuzen, oder die einfach gekreuzten Speichen, welche im Flansch zwischen ihren Flanschlöchern keine Zwischenlöcher haben, kann man zwar in einem Flansch einseitig verankern, da in diesen Fällen aber gar kein oder nur ein ungenügender Hebelarm zur Uebertragung eines Drehmomentes vorhanden ist, kann man solche Spannsysteme nicht oder nur schwierig verwenden, insbesondere bei Naben mit einer Bremsvorrichtung oder bei den Antriebsrädern der Fahrräder. Die zusätzliche Zugbelastung der Speichen, welche beispielsweise durch den Antrieb am Fahrrad-Hinterrad entsteht, kann sehr gross sein, was zu Deformationen der Felgen und Flansche an den Stellen der Speichenverankerungen oder zu Speichenbrüchen führt.

Die Speichenspannsysteme, welche ausreichende Hebel arme bieten, sind die heute gebräuchlichsten Systeme mit zwei-, drei- und vierfach gekreuzten Speichen, welche bei einem Rad mit üblicherweise 36 Speichen 2, 4 und 6 Zwischenlöcher im Flansch zwischen den Flanschlöchern eines Speichenpaares haben. Die einzelnen Speichen werden in der Umfangsrichtung des Rades abwechslungsweise von aussen und von innen in den Flansch gesteckt und dann zur Felge geführt. Die von aussen eingesteckte Speiche tritt aus dem Flansch innen als Innenspeiche aus. Die von innen eingesteckte Speiche tritt aus dem Flansch aussen als Aussenspeiche aus.

Die Speichenpaare haben bei zwei-, drei- und vierfacher Kreuzung der Speichen viele gemeinsame Merkmale. Jedes Paar besteht aus einer Innen- und einer Aussenspeiche. Beide Speichen sind gleich lang und verlaufen auf ihrer ganzen Länge ausserhalb des Flanschlochkreises.

Es sind seit langem Bestrebungen im Gange, die Drahtspeichen nur von der einen Seite des Nabenflansches in die Flanschlöcher zu stecken. Fortschritte wurden dabei erreicht durch Konstruktionen von Naben mit speziell ausgebildeten Flanschen.

Die US-A-2'702'725 zeigt zum Beispiel eine Vielzahl von Nabenflanschen, in welchen die Flanschlöcher in zwei konzentrischen Kreisen angeordnet sind, wobei die Flanschlöcher in der Umfangsrichtung abwechslungsweise auf einem Lochkreis mit kleinerem und grösserem Durchmesser liegen. Durch diese Anordnung der Flanschlöcher bleibt die erzwungene Speichenkrümmung in der Nähe des Nabenflansches in zulässigen Grenzen, und eine Verankerung der Speichen im Flansch nur von einer Seite her ist darum möglich.

Eine andere Lösung ist bekannt aus der EP 0'004'155. Hier wird die einseitige Verankerung der Speichen zum Beispiel durch spezielle axiale Vertiefungen in den Flanschen im Bereiche der Flanschlöcher erreicht, sodass alle Speichen zwar von einer Seite in den Flansch gesteckt werden, jedoch jede zweite Speiche um eine Speichendicke axial versetzt aus dem Flansch herauskommt.

Der Nachteil dieser Lösungen ist vor allem darin zu sehen, dass spezielle Nabenkonstruktionen zur Realisierung von einseitigen Speichenverankerungen in den Flanschen erforderlich sind. Diese Naben sind von deren Konstruktion her grundsätzlich teurer als konventionelle Naben. Aufgrund des Standes der Technik ist die Fachwelt überzeugt, dass es unmöglich ist, gekreuzte konventionelle Speichen, welche über ausreichende Hebelarme verfügen, bei einer konventionellen Nabe nur von einer einzigen Seite her in den Flansch zu stecken und dies aus folgendem Grund: Solche zwei Speichen, welche in zwei benachbarten Flanschlöchern im Flansch verankert sind und wovon eine in der Drehrichtung der Nabe zur Felge gezogen wird und die andere in der gegenseitigen Richtung verläuft, und welche sich bei Betrachtung des Rades von der Seite her miteinander kreuzen, berühren sich in Wirklichkeit gar nicht, da die eine, eine Aussen- und die andere eine Innenspeiche ist. Somit sind diese Speichen durch den Flansch getrennt und verlaufen in verschiedenen radialen Ebenen. Die Stelle dieser ersten Kreuzung in Richtung vom Flanschloch zur Felge ist bei beiden Speichen nur wenige Millimeter entfernt von den Flanschlöchern, aus welchen diese Speichen kommen. Wenn man jetzt theoretisch die zwei erwähnten Speichen von der gleichen Seite in den Flansch steckt, kann man die beliebige erste von ihnen problemlos zur Felge führen. Die zweite Speiche muss man aber sofort nach ihrem Austritt aus dem Flanschloch sehr schräg in axialer Richtung weg vom Flansch bis zur Kreuzungsstelle mit der ersten Speiche führen, damit sie hier die erste Speiche kreuzen kann. Dadurch verliert diese zweite Speiche den Kontakt mit dem Flansch an der inneren Seite ihres vorfabrizierten, etwa rechtwinkligen Bogens, weil das Flanschloch einen grösseren Durchmesser hat als die Speiche. An der Kreuzungsstelle muss sich die zweite Speiche sehr stark in axialer Richtung zum Flansch hin biegen, da die erste Speiche, welche seitlich am Flansch anliegt, nicht nachgeben kann. Da das engste Anliegen jeder Speiche an dem Flansch gerade im inneren Bereich des Speichenbogens für die Dauerhaftigkeit des gespeichten Rades von überaus grösster Wichtigkeit ist, wird bei einer solchen theoretischen Anordnung die zweite Speiche nach Inbetriebnahme des Rades im Bereich ihres Bogens bald brechen. Aus dem vorher Dargelegten wird ersichtlich, dass bei den Bemühungen um eine einseitige Speichenverankerung im Flansch die erwähnte erste Kreuzung der Speichen beim Flansch das eigentliche Problem ist.

Es ist die Aufgabe der vorliegenden Erfindung, ein Drahtspeichenrad mit einer konventionellen Nabe, deren Flansche je einen einzigen, in einer einzigen Ebene liegenden Flanschlochkreis aufweisen, unter Verwendung von konventionellen, am nabenseitigen Ende etwa rechtwinklig gebogenen Speichen zu schaffen, bei welchem alle Speichen im einen oder anderen, beliebigen Nabenflansch wahlweise nur von innen oder nur von aussen eingesteckt sind. Dabei sollen genügend lange Hebelarme zur Uebertragung der Drehmomente geschaffen werden.

Die Aufgabe löst ein Drahtspeichenrad mit den kennzeichnenden Merkmalen des Patentanspruches 1. Jedes Speichenpaar besteht bei dem erfindungsgemässen Drahtspeichenrad aus zwei Innen- oder zwei Aussenspeichen. Beide Speichen sind unterschiedlich lang. Wenigstens die längere der Speichen verläuft teilweise innerhalb und teilweise ausserhalb ihres Flanschlochkreises.

Für jede Flanschgrösse gibt es mehrere mögliche Kombinationen von Speichenlängen eines Speichenpaares, welche dieser Definition entsprechen, je nach der Grösse der Felge und der Anzahl der Speichen. Es gibt aber verschiedene mögliche Paarungen der Speichen auch bei der gleichen Felge und dem gleichen Flansch. Für jeden Fall muss man abwägen, welche der sich anbietenden Möglichkeiten die beste ist, wobei besonders die Länge der Hebelarme von beiden Speichen berücksichtigt werden muss.

Die erfindungsgemässe einseitige Verankerung der Speichen in den Nabenflanschen kann viele Vorteile bringen. Man erzielt beispielsweise bei Verwendung von Innenspeichen am Vorderrad eines Rennfahrrades aerodynamische Vorteile. Bei Verwendung von Aussenspeichen an einem zweispurigen Fahrzeug erhöht sich die Seitensteifheit des Rades gegenüber einem Rad mit einem konventionellen Spannsystem. Beim Fahrrad-Hinterrad eines Sportfahrrades, welches mit mehreren Zahnkränzen ausgestattet ist, kann man dessen beschränkte Seitensteifheit, welche durch eine systembedingte Zentrierung der Felge nicht in der Mitte zwischen den Nabenflanschen verursacht wird, durch verschiedene Kombinationen der Spannsysteme bei beiden Flanschen erhöhen. Dabei können auch konventionelle Systeme mit den Spannsystemen des erfindungsgemässen Drahtspeichenrades sinnvoll kombiniert werden. Bei Verwendung von Innenspeichen bei dem zahnkranzseitigen Nabenflansch kann man eine Verbreiterung des Raumes zwischen dem grössten Zahnkranz und den Speichen erzielen und einen zusätzlichen Zahnkranz montieren.

Im Folgenden werden anhand von Zeichnungen eines konventionell eingespeichten Rades erst dessen charakteristische Merkmale erläutert. Weiter werden dann beispielsweise Ausführungen der Erfindung anhand von Zeichnungen näher beschrieben und erläutert.

Es zeigt:

Figur 1 eine konventionelle Nabe zur Hälfte in einem Schnitt längs der Nabenachse, mit zwei Speichenpaaren, gemäss dem Stand der Technik;

Figur 2 eine von dem Raum zwischen den Nabenflanschen aus gesehene Seitenansicht eines Flansches der Nabe von Figur 1 mit allen verankerten Speichen, gemäss dem Stand der Technik;

Figur 3 eine konventionelle Nabe entsprechend Figur 1 mit zwei Speichenpaaren entsprechend dem ersten erfindungsgemässen Ausführungsbeispiel;

Figur 4 eine von dem Raum zwischen den Nabenflanschen aus gesehene Seitenansicht eines Flansches der Nabe von Figur 3 mit allen verankerten Speichen;

Figur 5 einen Ausschnitt aus Figur 4 in vergrösserter Darstellung;

Figur 6 eine von dem Raum zwischen den Nabenflanschen aus gesehene Seitenansicht eines Nabenflansches mit allen verankerten Speichen entsprechend einer weiteren Ausführungsform der Erfindung.

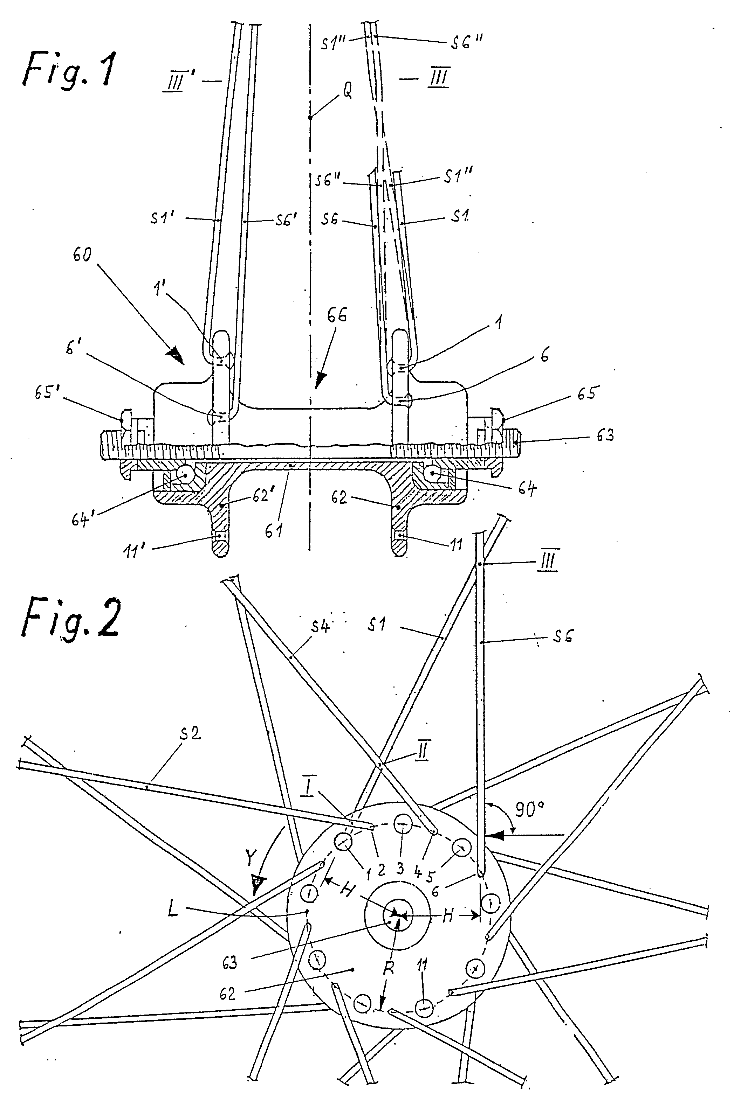

Figur 1 zeigt eine konventionelle Nabe 60 eines gespeichten Rades für ein Fahrzeug, zum Beispiel für ein Fahrrad oder ein anderes Fahrzeug mit drei oder vier Rädern. Die aus zugfestem Drahtmaterial hergestellten Speichen S verbinden unter Vorspannung die Nabe 60 mit der nicht dargestellten Felge zu einem Drahtspeichenrad, welches in einem Fahrradrahmen oder an einem anderen Fahrzeug befestigt ist. Das hier verwendete Speichenspannsystem ist das sogenannte System mit dreifach gekreuzten Speichen nach dem Stand der Technik, was näher in Figur 2 erläutert wird. Für die bessere Verständlichkeit konzentriert sich die Ansicht der Nabe 60 in Figur 1 nur auf das Speichenpaar S1, S6 im Flansch 62, beziehungsweise S1′, S6′ im Flansch 62′, wobei alle anderen Speichen ausgelassen sind. Die Ansicht ist in senkrechter Richtung zur Speiche S6, wie in Figur 2 dargestellt, gezeigt.

Die Nabe 60 besteht aus einem Nabenkörper 61 mit zwei Nabenflanschen 62, 62′ an seinen axialen Enden. Der Nabenkörper 61 ist mit Hilfe von Lagervorrichtungen 64, 64′ drehbar um die Nabenachse 63 gelagert. Die in dieser einfachsten Form dargestellte Nabe 60 vertritt verschiedene Arten von konventionellen Radnaben, die im wesentlichen einander ähnlich sind und welche die vorher beschriebenen Bestandteile beinhalten. Es kann sich dabei um verschiedenste Naben handeln, zum Beispiel um vordere Fahrradnaben, hintere Fahrradnaben, Naben mit oder ohne Bremsvorrichtung, Naben mit innerem Ganggetriebe, Naben mit einem oder mehreren angetriebenen Zahnkränzen an der äusseren Seite eines Flansches oder um Naben für verschiedene mehrspurige Fahrzeuge.

Jeder der Flansche 62, 62′ hat einen grösseren Durchmesser als der Nabenkörper 61 und liegt im wesentlichen in einer etwa senkrechten Ebene zur Nabenachse 63. Der maximale Durchmesser der Flansche kann grösser oder kleiner sein als derjenige etwa im Massstab 1:1 in Figur 1 gezeigte, und normalerweise ist er bei beiden Flanschen gleich. Es gibt aber auch Flansche von verschiedener Grösse an einer Nabe.

In der Nähe des äusseren Flanschumfanges sind mehrere Flanschlöcher 11, 11′ angeordnet, deren Richtung etwa parallel zur Nabenachse 63 verläuft. Die Flanschlöcher 11, 11′ in jedem der Flansche 62, 62′ haben eine gleiche geometrische Formgebung und sind in gleichen radialen Abständen von der Nabenachse 63, in gleichen Abständen untereinander und in gleicher axialer Lage angeordnet. Im Normalfall weist jeder der Flansche 62, 62′ 18 Flanschlöcher auf. Es kann aber auch eine grössere oder kleinere, gerade Anzahl sein. Die Flanschlöcher 11, 11′ beider Flansche 62, 62′ sind gegeneinander in Umfangsrichtung um einen halben Lochabstand versetzt angeordnet, sodass zum Beispiel die Flanschlöcher 1′, 6′, 11′ im Flansch 62′ gegen die Drehrichtung Y der Nabe 60 um diese Distanz gegenüber den Flanschlöchern 1, 6, 11 im Flansch 62 versetzt sind.

Die in den Flanschlöchern 1, 6, 1′, 6′ verankerten konventionellen Drahtspeichen S1, S6, S1′, S6′ sind für ihre Verankerung in den Flanschen 62, 62′ um einen Winkel von etwa 90 Grad gebogen und am Ende der Biegung haben sie einen Kopf, der von grösserem Durchmesser als der Durchmesser der Speiche und des Flanschloches ist. Das andere, nicht dargestellte Speichenende ist gerade ausgebildet und am Ende mit einem Gewinde versehen. Die Verbindung der Speichen mit der nicht dargestellten konventionellen Felge wird mittels Speichennippel hergestellt, welche auf die Speichenenden aufschraubbar sind und mit Köpfen ausgestattet sind, die einen grösseren Durchmesser als den de Felgenlöcher aufweisen. Die Nippel sind drehbar in diesen Felgenlöchern veran kert. Das Zentrieren des Drahtspeichenrades geschieht durch Verdrehen der Speichennippel, wodurch in den Speichen Spannung entsteht. Nach Beendigung des Zentrierens wird die Nabenachse 63 radial in der Felgenmitte durch die vorgespannten Speichen gehalten.

Die einzelnen Speichen S werden in der Umfangsrichtung abwechslungsweise von aussen und von innen in die Flansche 62, 62′ gesteckt und dann in die Felgenlöcher geführt. Die von aussen gesteckten Speichen S6, S6′ treten aus der Flansch-Innenseite, also in den Raum 66 zwischen den Flanschen aus. Sie heissen deshalb Innenspeichen. Die vom Raum 66 her, also von innen nach aussen gesteckten speichen S1, S1′ treten aus der Flansch-Aussenseite aus. Sie heissen entsprechend Aussenspeichen.

Die Seitensteifheit jedes Drahtspeichenrades ist bei jedem der Flansche bekanntlich in hohem Masse abhängig von dem Winkel zwischen den Speichen einerseits und der Radmittelebene Q andrerseits, welche strichpunktiert dargestellt ist. Die Radmittelebene Q läuft durch die Mitte der Felge und ist von den Anschlagflächen 65, 65′ an der Nebenachse in axialer Richtung gleich weit entfernt. Diese Anschlagflächen dienen zur Befestigung des Rades im Fahrradrahmen oder an einem anderen Fahrzeug.

Die zu einem Speichenpaar gehörenden Speichen, zum Beispiel die Aussenspeiche S1 und die Innenspeiche S6 werden vom Flansch 62 direkt zur Felge geführt, sodass sie sich unterwegs nicht berühren. Man kann diese zwei Speichen aber auch verflechten, wobei die Aussenspeiche S1 an der Kreuzungsstelle III hinter der Innenspeiche S6 durchgeführt wird, wodurch die gespannten Speichen am Kreuzungspunkt III unter Druck aneinander anliegen. Diese Methode ist durch die gestrichelt eingezeichneten Speichen S1″ und S6″ angedeutet. Beide beschriebenen Speichenführungen haben ihre Vor- und Nachteile und beide werden benutzt.

Das in Figur 1 teilweise dargestellte Speichenrad ist mittig zentriert, da sich die Radmittelebene Q in der Mitte zwischen beiden Flanschen 62, 62′ befindet. Die Verwendung dieses konventionellen Spannsystems mit beidseitiger Verankerung der Speichen in beiden Flanschen bedeutet aber, dass auch beide erwähnten Winkel zwischen den Speichen und der Radmittelebene Q und folglich auch die Seitensteifheit des Rades von beiden Seiten gleich gross ist. Allgemein ist zu sagen, dass je grösser ein Winkel zwischen den Speichen und der Radmittelebene an einer Seite eines Drahtspeichenrades ist, desto grössere seitliche Kräfte das Rad von dieser Seite aufnehmen kann.

Figur 2 zeigt eine von dem Raum 66 zwischen den Flanschen 62, 62′ gesehene Seitenansicht des Nabenflansches 62 mit allen nach dem Stand der Technik in ihm verankerten Speichen S. Die Speichen sind nach dem heute gebräuchlichsten Spannsystem mit dreifach gekreuzten Speichen angeordnet, bei welchem 18 Speichen S in dem Flansch 62 und 18 Speichen S in dem in Figur 2 nicht dargestellten Flansch 62' verankert sind. Das Rad weist also 36 Speichen auf, was die heute häufigste Speichenanzahl ist. Die Speichen in dem Flansch 62 sind in Paaren angeordnet, wobei sich beide Speichen eines Paares kreuzen und in zwei aufeinanderfolgenden, nicht dargestellten Felgenlöchern der gleichen Felgenseite enden. Zwischen diesen zwei Felgenlöchern gibt es immer ein Felgenloch der anderen Felgenseite. Beim Flansch 62' ist es ähnlich. Die Speichen S' enden aber in der anderen Felgenseite, sodass die nicht dargestellten Felgenlöcher in der Reihenfolge nacheinander abwechslungsweise mit Speichen vom Flansch 62 her und vom Flansch 62' her besetzt werden. Dazu ist auch die in Figur 1 beschriebene Versetzung der Flanschlöcher der Flansche 62, 62' in der Umfangsrichtung der Nabe 60 um einen halben Flanschlochabstand nötig.

Die zu einem Paar gehörenden Speichen S1 und S6 sind im Flansch 62 in den Flanschlöchern 1 und 6 derart verankert, dass die Speiche S1 eine Aussenspeiche, die Speiche S6 eine Innenspeiche ist. Zwischen den Flanschlöchern 1 und 6 sind vier Flanschlöcher 2, 3, 4 und 5 vorhanden, die zu Speichen von anderen Speichenpaaren gehören. Die Speiche S1 ist gleichlang wie die Speiche S6. Betrachtet man die Verankerung aller Speichen S im Flansch 62 in der Umfangsrichtung der Reihe nach, so sieht man, dass die Speichen abwechslungsweise von innen und von aussen in die Flanschlöcher gesteckt sind, sodass wiederholt eine Aussenspeiche durch eine Innenspeiche abgewechselt wird.

In der Seitenansicht des Flansches 62 verlaufen alle Speichen S auf ihrem Weg vom Flansch zur Felge hin ausserhalb des Flanschlochkreises L, welcher die Zentren der einzelnen Flanschlöcher 1, 2, 3, 4, 5 usw. verbindet, das heisst, dass keine Speiche mit ihrer Achse in das Innere dieses Flanschlochkreises L gerät. Jede Speiche kreuzt drei andere Speichen. Zum Beispiel kreuzt die Speiche S1 die Speichen S2, S4 und S6 an den Kreuzungsstellen I, II und III. Die Speiche S1 berührt keine von den drei gekreuzten Speichen, wie aus der Figur 1 ersichtlich ist. Würde man die Speichen des Speichenpaares S1, S6 an der Kreuzungsstelle III verflechten, so würden hier die zwei Speichen unter Druck aneinanderliegen, wie in Figur 1 der strichlinierte Verlauf die Speichen S1 und S6 mit der Bezeichnung S1″ und S6″ zeigt.

Die Speichen S1 und S2 sind in zwei benachbarten Flanschlöchern 1 und 2 im Flansch verankert. Die Speiche S2 wird mehr oder weniger tangential vom Flanschlochkreis L in der Drehrichtung Y der Nabe zur Felge geführt, die Speiche S1 verläuft in der gegenseitigen Richtung. Die Aussenspeiche S1 und die Innenspeiche S2 kreuzen sich an der Stelle I, sie berühren sich hier jedoch nicht. Für beide Speichen ist die Stelle I die erste Kreuzungsstelle in Richtung vom Flansch zur Felge, welche nur wenige Millimeter von den Flanschlöchern 1 und 2 beider Speichen S1 und S2 entfernt ist. Würde man jetzt die Aussenspeiche S1 als eine Innenspeiche im Flansch verankern, so würden beide Speichen S1 und S2 in derselben Ebene liegen, und könnten einander an der Stelle I unmöglich passieren, wie schon begründet wurde. Aehnlich wie bei dreifach gekreuzten Speichen sieht die Situation auch bei zwei- oder vierfach gekreuzten Speichen aus, weil auch hier die kritische erste Kreuzungsstelle zu wenig weit entfernt von den Flanschlöchern von beiden Speichen liegt. Das sind die Gründe, warum die Fachleute eine einseitige Verankerung der Speichen im Flansch nach bisherigen Konstruktionskenntnissen für unmöglich halten.

Wie schon erwähnt und begründet soll ein Drahtspeichensystem genügend lange Hebelarme am Flansch zur Uebertragung der Drehmomente haben. Nach langjährigen Erfahrungen der Fahrradindustrie hat sich ein Hebelarm H in der Länge von etwa 20mm, welcher bei dreifach gekreuzten Speichen nur unwesentlich kürzer ist als der Radius R des Flanschlochkreises L, als genügend lang erwiesen. Der Hebelarm H ist bie beiden Speichen des Speichenpaares S1 und S6 gleichlang. Beim gleichen Flanschlochkreis L, aber vierfach gekreuzten Speichen, wäre der Hebelarm nur geringfügig länger als H, die Radbespannung aber komplizierter. Bei zweifach gekreuzten Speichen ist der Hebelarm jedoch meistens ungenügend. Darum wird dieses Spannsystem nur bei Flanschen von einem grösseren Durchmesser verwendet.

Bei der Annahme, dass die Nabe 60 eine zum Beispiel durch eine Kette angetriebene Nabe ist, wird bei der vorgegebenen Drehrichtung Y des Flansches 62 die Aussenspeiche S1 beim Antrieb noch mehr auf Zug belastet als wenn das Rad im Ruhezustand ist. Die Speiche S6 wird aber teilweise entlastet. Weil, wie vorher schon gesagt wurde, das engste Anliegen der Speichen an dem Flansch im Bereich des Speichenbogens von grösster Wichtigkeit ist, werden die Aussenspeichen auf die Dauer grössere Leistungen als die Innenspeichen bringen können. Wie in Figur 1 zu sehen ist, werden die Aussenspeichen S1, S1' nach ihrem Austritt aus dem Flanschloch durch ihren Schräglauf zur Felge in axialer Richtung näher zum Flansch hin gezogen, was den Kontakt zwischen den Aussenspeichen und den Flanschen im Bereich des Speichenbogens begünstigt. Die Innenspeichen S6, S6' werden aber vom Flansch weggezogen. Das Verflechten der Speichen, wie es die Speichen S1″, S6″ verdeutlichen, verbessert den erwähnten Kontakt zum Flansch bei Aussen- und auch bei Innenspeichen. Würde man die Nabe 60 bei derselben Drehrichtung Y bremsen statt antreiben, so sollte man die Anordnung der Speichen umkehren, also die Innenspeichen als Aussenspeichen im Flansch verankern und umgekehrt.

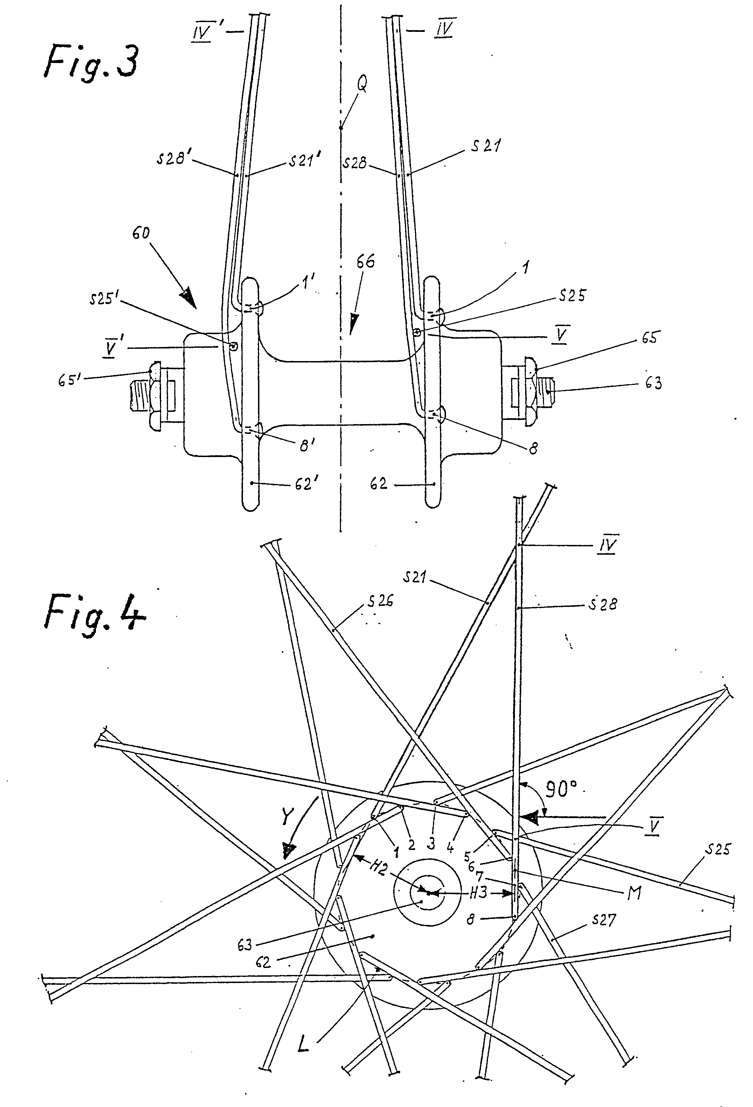

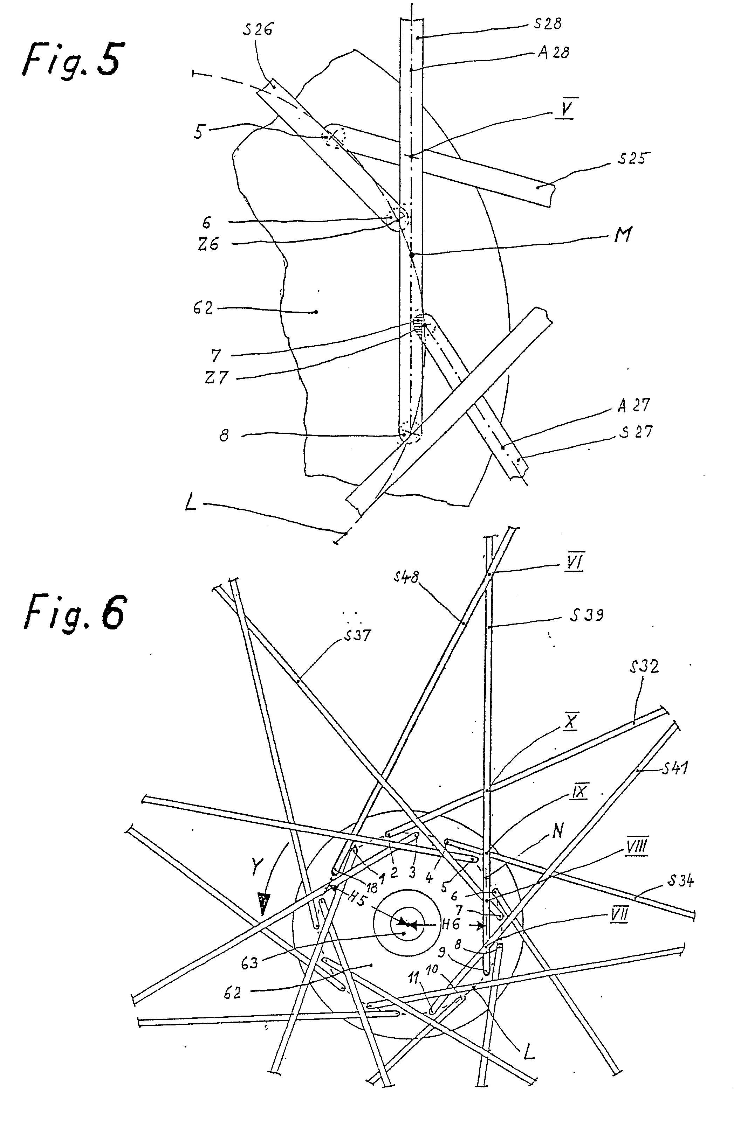

Figur 3 zeigt nun eine konventionelle Nabe 60 entsprechend Figur 1 mit einem Speichenspannsystem nach der ersten Ausführungsform des erfindungsgemässen Drahtspeichenrades. Für die bessere Verständlichkeit konzentriert sich die Darstellung ähnlich wie in Figur 1 auf das Speichenpaar S 21, S 28 im Flansch 62, beziehungsweise S 21', S 28' im Flansch 62' wobei alle anderen Speichen ausgelassen werden. Die Ansicht ist in senkrechter Richtung zur Speiche S28, wie in Figur 4 dargestellt, gezeigt.

Die einzelnen Speichen sind nur von einer Seite her in die Flansche 62, 62' gesteckt und dann zur Felge geführt, wie diese erste Ausführungsform der Erfindung zeigt. Die in die axial äussere Seite des Flansches 62 gesteckten Speichen S 21, S 28 treten aus der axial inneren Seite des Flansches 62 aus, also in den Raum 66 zwischen den Flanschen 62, 62' und es sind, wie alle übrigen im Flansch 62 verankerten Speichen, die Innenspeichen. Die Speichen S 21', S 28' sind vom Raum 66 aus zwischen den Flanschen 62, 62' in die axial innere Seite des Flansches 62' gesteckt, sodass sie aus der axial äusseren Seite des Flansches 62' austreten und es sind, wie alle übrigen im Flansch 62' verankerten Speichen, die Aussenspeichen.

Auch das in Figur 3 dargestellte Speichenrad ist mittig zentriert. Auch hier, wie in Figur 1, befindet sich die Radmittelebene Q in der Mitte zwischen beiden Flanschen 62, 62'. Da aber die Winkel zwischen den Speichen und der Radmittelebene Q nicht gleichgross sind, folgt daraus, dass an der Seite des Flansches 62', zu welcher der grössere von beiden Winkeln gehört, das gespeichte Rad an der Felge grössere seitliche Kräfte von aussen, das heisst, in der axialen Richtung vom Flansch 62' zum Flansch 62, aufnehmen kann als von der anderen Seite. Die zu einem Speichenpaar gehörenden Speichen, zum Beispiel die Innenspeichen S 21, S 28 oder die Aussenspeichen S 21', S 28' werden von den Flanschen 62 beziehungsweise 62' direkt zur Felge geführt, sodass sie sich unterwegs nicht oder nur leicht berühren. Diese Speichen könnte man aber an den Kreuzungsstellen IV beziehungsweise IV' auch verflechten, ähnlich wie in Figur 1 die Speichen S1", S6" an der Stelle III.

Figur 4 zeigt eine vom Raum 66 aus gesehene Seitenansicht des Nabenflansches 62 entsprechend Figur 2 mit allen in ihm verankerten Speichen S, welche gemäss dem Speichenspannsystem nach Figur 3 angeordnet sind, das heisst nach der ersten Ausführungsform des erfindungsgemässen Drahtspeichenrades.

Aehnlich wie in Figur 2 sind auch hier die 18 Speichen S in Paaren angeordnet, wobei sich beide Speichen eines Paares kreuzen und in zwei nicht dargestellten, aufeinanderfolgenden Felgenlöchern der gleichen Felgenseite enden. Aehnlich wie in Figur 2 ist es beim Flansch 62' analog und seine Speichen S' enden in zwei aufeinanderfolgenden Felgenlöchern der anderen Felgenseite, wobei die Felgenlöcher der zwei Felgenseiten in der Felge abwechslungsweise angeordnet sind. Zur Ergänzung sei allgemein gesagt, dass die Verankerung der Speichen in einer Felge bei allen nur denkbaren Speichenspannsystemen in einer Hinsicht immer die gleiche ist, nämlich dass die Speichen von der Nabe her in Umfangsrichtung abwechslungsweise immer einmal von einem Flansch in ein Felgenloch der einen Felgenseite, und einmal von dem anderen Flansch in ein Felgenloch der anderen Felgenseite in die Felgenlöcher münden. Dazu ist auch die Versetzung der Flanschlöcher bei den Flanschen in der Umfangsrichtung um einen halben Flanschlochabstand notwendig. Diese Versetzung ist in jeder konventionellen Nabe vorhanden.

Im Unterschied zu Figur 2 werden die zu einem Paar gehörenden Speichen S 21 und S 28 im Flansch 62 in den Flanschlöchern 1 und 8 derart verankert, dass beide Speichen die Innenspeichen sind. Zwischen den Flanschlöchern 1 und 8 sind 6 Flanschlöcher 2, 3, 4, 5, 6 und 7 vorhanden, die zu Speichen von anderen Speichenpaaren gehören. Die Speiche S28 ist länger als die Speiche S21. Betrachtet man die Verankerungen aller Speichen S im Flansch 62 in der Umfangsrichtung der Reihe nach, so sieht man, dass jeweils eine kürzere Speiche mit einer längeren Speiche abwechselt.

In der Seitenansicht des Flansches 62 verläuft die kürzere Speiche S 21 des Speichenpaares S 21, S 28 ausserhalb des Flanschlochkreises L ähnlich wie die Speiche S 1 in Figur 2. Die längere Speiche S 28 verläuft jedoch von ihrem Flanschloch 8 in Richtung zur Felge zuerst innerhalb des Flanschlochkreises L. Sie verläuft zwischen dem nächsten Flanschloch 7 und dem Mittelpunkt des Flanschlochkreises L im Inneren des Flanschlochkreises L, nachher schneidet sie den Flanschlochkreis L zwischen den Flanschlöchern 7 und 6 im Punkt M, tritt dort aus dem Flanschlochkreis L aus und verläuft dann ausserhalb von diesem zur Felge hin. Dieses Detail kann man besser der vergrösserten Darstellung in Figur 5 entnehmen.

In Figur 5 sieht man die im Flanschloch 8 des Flansches 62 verankerte Speiche S 28, deren Achse A 28 zwischen dem Zentrum Z7 des ersten Flanschloches 7 und dem Mittelpunkt des Flanschlochkreises L in Richtung zur Felge im Innern des Flanschlochkreises L verläuft. Im Punkt M, der zwischen den Zentren Z 7 und Z 6 der Flanschlöcher 7 und 6 liegt, schneidet die Achse A 28 den Flanschlochkreis L und läuft von dem Punkt M zur Felge ausserhalb des Flanschlochkreises L. Die Achse A 27 der Speiche S 27, welche im Zentrum Z7 des Flanschloches 7 anfängt und von hier zur Felge läuft, schneidet sich mit der Achse A 28 der Speiche S 28 nicht. Die teilweisen Ueberdeckungen der Speichen S 27 und S 26 durch die Speiche S 28 in den strichliniert dargestellten Bereichen ist nicht von Belang, da die Speichen S 27 und S 26 die Speiche S 28 gar nicht oder nur leicht berühren. Dies wird dadurch ermöglicht, dass einerseits die Speichen S 27, S 26 hier noch keine wesentliche Höhe über dem Flansch 62 erreicht haben, weil diese strichlinierten Bereiche sich am Anfang der Speichenbiegungen befinden. Andrerseits läuft die Speiche S 28, welche sich mit der Speiche S 25 an der Kreuzungsstelle V kreuzt, in diesem Abschnitt von der Oberfläche des Flansches 62 axial schräg weg, wie in Figur 3 gut erkennbar ist, was ihr Passieren der Speichen S 27, S 26 weiter erleichtert. Allgemein sei gesagt, dass der Ueberdeckungsbereich der Speichen S 28 und S 27, der in Figur 5 schraffiert ist, je nach den Verhältnissen grösser oder kleiner als dargestellt sein kann oder gar nicht existieren muss. Hier spielt zum Beispiel die Anzahl der Flanschlöcher im Flansch, der Flanschlochdurchmesser, die Speichendicke, das Längenverhältnis der Speichen eines Speichenpaares etc. eine Rolle.

Durch die beschriebene erfindungsgemässe Anordnung der Speichen wird bei der Innenspeiche S 28 die Distanz von deren Flanschloch 8 zu deren ersten Kreuzungsstelle V mit der Innenspeiche S 25 wesentlich vergrössert gegenüber dem kritischen, in Figur 2 beschriebenen theoretischen Zustand an der Kreuzungsstelle I, wenn man dort die Speichen S1 und S2 im Flansch als Innenspeichen verankern würde. Die Verbiegung der Innenspeiche S 28 an der Kreuzungsstelle V, welche durch die im Schnitt dargestellte Speiche S 25 verursacht wird, ist fast unsichtbar, wie man der Figur 3 entnehmen kann. Bei der Aussenspeiche S 28′ im Flansch 62′ ist diese durch die Speiche S 25′ verursachte Verbiegung an der Stelle V′ etwas ausgeprägter, aber immer noch zu verantworten.

Wie man den Figuren 3, 4 und 5 entnehmen kann, werden die langen Speichen S 28, S 28′ an den Kreuzungsstellen V, V′ axial in Richtung von dem Flansch weggezogen, die kurzen Speichen S 25, S 25′ aber in Richtung zum Flansch hin gedrückt. Analog zur Figur 2 sollen die kurzen Speichen S 25, S 25′ zur Uebertragung des Drehmomentes dienen, da sie im Bereich ihres Bogens enger an dem Flansch anliegen als die langen Speichen S 28, S 28′. So ist dieser Zustand in Figur 4 auch dargestellt, wieder unter der Annahme, dass die in Richtung Y drehende Nabe 60 eine angetriebene Nabe ist. Würde man die Nabe ausschliesslich durch Bremsen belasten, wäre die umgekehrte Anordnung der langen und kurzen Speichen vorteilhafter.

Was die gegenseitige Anordnung der langen und kurzen Speichen in beiden Flanschen 62, 62′ betrifft, kann man zum Beispiel die langen Speichen in beiden Flanschen 62, 62′ in derselben Richtung zur Felge führen, wie es in Figur 3 dargestellt ist. Die Ansicht des Flansches 62 in Figur 4 entspricht der in derselben Richtung gesehenen, nicht dargestellten Ansicht des Flansches 62′, nur ist der Flansch 62′ um den halben Flanschlochabstand gegen die Drehrichtung Y der Nabe 60 verdreht. Die langen Speichen S 28, S 28′ verlaufen also zur Felge in derselben Richtung. Man kann aber die Speichen S 28, S 28′ auch in der gegenseitigen Richtung zur Felge verlaufen lassen. Beide Methoden sind anwendbar bei verschiedenen Bedingungen, auf welche jedoch nicht weiter eingegangen wird.

Die Hebelarme H2, H3 der Speichen S 21, S 28 sind nicht gleich lang wie es in Figur 2 bei den Speichen S1, S6 mit ihren Hebelarmen H der Fall ist. Der Unterschied ist aber so klein, dass man ihn vernachlässigen kann. Obwohl der Hebelarm H3 bei der längeren Speiche S28 geringfügig länger ist als der Hebelarm H2 der Speiche S 21, soll man trotzdem die Speiche S 21 zur Uebertragung des Drehmomentes benützen, da der engere Kontakt der Speiche S 21 mit dem Flansch im Bogenbereich einen grösseren Vorteil bringt als der unwesentlich längere Hebelarm H3 der Speiche S28.

Die Speichen S 21, S 28 und S 21′, S 28′ sind in Figur 3 und 4 für die bessere Verständlichkeit nicht verflochten dargestellt. In der Praxis hat sich aber gezeigt, dass die Verflechtung der Speichen an der Stelle IV beziehungsweise IV′ vorteilhaft ist. Man kann zwar dadurch keinen besseren Kontakt der Speichen zu den Flanschen erzielen, aber es verschwindet ein durch das Aufeinandertreffen der schwingenden Speichen entstehender schriller Ton, der manchmal zu hören ist und der zu Speichenbrüchen oder zur Lockerung der Speichennippel führen kann.

Figur 6 zeigt eine Seitenansicht des Nabenflansches 62 entsprechend Figur 2 und Figur 4 mit einem Speichenspannsystem nach einer weiteren Ausführungsform des erfindungsgemässen Drahtspeichenrades. Die Speichen S 48, S 39 eines sich im Punkt VI kreuzenden Speichenpaares werden im Flansch 62 in den Flanschlöchern 18 und 9 als Innenspeichen verankert. Die Speiche S 39 ist länger als die Speiche S 48. Sie verläuft von ihrem Flanschloch 9 in Richtung zur Felge hin zuerst innnerhalb des Flanschlochkreises L zwischen den nächsten drei Flanschlöchern 8, 7 und 6 einerseits und dem Mittelpunkt des Flanschlochkreises L andrerseits, schneidet den Flanschlochkreis L im Punkt N zwischen den Flanschlöchern 6 und 5 und läuft nachher ausserhalb des Flanschlochkreises L zur Felge hin.

Auf ihrem Weg vom Flanschloch 9 kreuzt die lange Speiche S 39 mehrere andere Speichen. An der ersten Kreuzungsstelle VII wird sie durch die lange Speiche S 41 zum Flansch 62 hin gedrückt, wodurch ihr Kontakt mit dem Flansch 62 im Bogenbereich verbessert wird. Nachher wird sie durch die andere lange Speiche S 37 an der Stelle VIII vom Flansch weggehoben, was aber keine negativen Auswirkungen auf ihre Verankerung im Flanschloch 9 hat, weil ihr guter Kontakt zum Flansch schon vorher an der Stelle VII gesichert ist. Eine an der Speiche S 39 zwischen den Kreuzungsstellen VII und VIII in axialer Richtung entstandene S-förmige Krümmung sieht in der Praxis ganz unauffällig aus. Weitere zwei Kreuzungen sind für die Speiche S 39 nicht von Wichtigkeit. Nach Durchschneiden des Flanschlochkreises L im Punkt N kreuzt die Speiche S 39 die erste, in umgekehrter Umfangsrichtung verlaufende, kurze Speiche S 34 an der Stelle IX, ohne diese jedoch zu berühren. Die kurze Speiche S 32 wird an der Stelle X leicht in Richtung zum Flansch 62 hin gedrückt, was für den Kontakt der Speiche S 32 mit dem Flansch 62 von Vorteil ist. An der Stelle VI wird die Speiche S 39 mit der zum Speichenpaar gehörenden Speiche S 48 verflochten, um Speichenschwingungen zu unterbinden

Unter der Annahme, dass die Nabe angetrieben wird, scheint es von Vorteil, wenn die kürzere Speiche S 48 die Uebertragung des Drehmomentes übernimmt, wie es in Figur 6 durch die Drehrichtung Y der Nabe 60 festgelegt ist. Der Hebelarm H5 ist ja wesentlich länger als der Hebelarm H6. Das in Figur 6 dargelegte Spannsystem gewährleistet einen guten Kontakt aller Speichen, ob lang oder kurz, zum Flansch. Die erste Kreuzung der langen Speiche S 39 nach dem Flanschloch 9 an der Stelle VII hat, im Unterschied zu der Situation an der Stelle V in Figur 4, auf die Verankerung der langen Speiche S 39 einen positiven Einfluss wegen der Druckwirkung der langen Speiche S 41 in Richtung axial zum Flansch 62 hin.

Weil unzählige Grössen von Felgen und Flanschen existieren und weil es in einem Rad verschiedene Speichenzahlen geben kann, können zahlreiche Speichenspannsysteme Verwendung finden, bei welchen beispielsweise die längeren Speichen aus zwischen zwei, vier oder mehreren Flanschlöchern einerseits und dem Mittelpunkt des Flanschlochkreises L andrerseits im Inneren des Flanschlochkreises L verlaufen. Zu mancher längeren Speiche kann es wiederum mehrer mögliche Längen der kürzeren Speiche geben. Es versteht sich darum, dass zahlreiche weitere Ausgestaltungen der Erfindung als die vorher beschriebenen möglich sind, vorausgesetzt, dass das Grundprinzip bewahrt bleibt, nämlich dass ein Speichenpaar eines Drahtspeichenrades die Merkmale des Patentanspruches 1 aufweist. Bei der Suche nach einem günstigen Spannsystem bei vorgegebener Nabe und Felge soll man darauf achten, dass die Hebelarme der Speichen eines Speichenpaares möglichst lang und möglichst wenig unterschiedlich lang sind und dass ein gutes Anliegen am Flansch im inneren Bereich des Speichenbogens, besonders bei der Speiche, welche das Drehmoment überträgt, gewährleistet ist.

Das erfindungsgemässe Drahtspeichenrad weist konventionelle Radnaben und Drahtspeichen auf, welche millionenfach verbreitet und deswegen preiswert sind. Es kann erstmals ausschliesslich von einer Nabenflansch-Seite her eingespeicht sein, wobei die Speichen über genügend lange Hebelarme zur Uebertragung der Drehmomente an der Nabe angreifen. Die Lösung wurde in der Verwendung von zwei verschiedenen Speichenlängen an einem Nabenflansch gefunden.

## Patentansprüche

1. Drahtspeichenrad für Fahrräder und ähnliche Fahrzeuge, bestehend aus einer Nabe (60) mit zwei Nabenflanschen (62, 62'), welche je einen einzigen Flanschlochkreis aufweisen, wobei die Flanschlöcher (1-11, 18; 1', 6', 8', 11') je in einer einzigen, radialen Ebene liegen, einer Felge und die Felge mit der Nabe (60) verspannenden Drahtspeichen (S), wobei diese mit ihren nabenseitigen Enden, die etwa rechtwinklig abgebogen sind und am Ende einen Kopf aufweisen, in den Flanschlöchern (1-11, 18; 1', 6', 8') gehalten sind, dadurch gekennzeichnet,

dass bei wenigstens einem der Nabenflansche (62, 62') sämtliche aus ihm herauskommenden Drahtspeichen (S) in mehreren identischen Speichenpaaren (S21, S28; S39, S48; S32, S41) angeordnet sind, wobei beide Speichen (S) jedes Speichenpaares (S21, S28; S39, S48; S32, S41), welche sich in der Seitenansicht des Nabenflansches (62) kreuzen und in zwei aufeinanderfolgenden Felgenlöchern der gleichen Felgenseite enden,

entweder aus dem Raum (66) zwischen den Flanschen (62, 62') in die Innenseite des Flansches (62') gesteckt sind (S21', S28'), sodass sie aus der Aussenseite dieses Flansches (62') herauskommen, oder von der Aussenseite des Flansches (62) gesteckt sind (S21, S28; S39, S48; S32, S41), sodass sie aus der Innenseite dieses Flansches (62) in den Raum (66) zwischen den Flanschen (62, 62') herauskommen, bevor sie zur Felge geführt werden,

wobei eine Speiche (S28, S39, S41) jedes Speichenpaares (S21, S28; S39, S48; S32, S41) wenigstens um die Hälfte der Distanz zwischen den Zentren (Z6, Z7) von zwei nebeneinanderliegenden Flanschlöchern (6, 7) des dazugehörigen Flansches (62) länger ist als die andere zum Speichenpaar (S21, S28; S39, S48; S32, S41) gehörende Speiche (S21, S48, S32),

und wobei wenigstens diese längere Speiche (S28, S39, S41) jedes Speichenpaares (S21, S28; S39, S48; S32, S41) in einem solchen Flanschloch (8, 9, 11) des Flanschlochkreises (L) verankert ist und in einer solchen Richtung verläuft, dass in der Seitenansicht des Flansches (62) ihre Achse in der Richtung vom Zentrum ihres Flanschloches (8, 9, 11) aus zur Felge hin zuerst innerhalb des Flanschlochkreises (L) verläuft, derart,

dass sie entweder zwischen dem Zentrum (Z7) des ersten, ihrem Flanschloch (8) benachbarten Flanschloches (7) oder zwischen den Zentren von mehreren, ihrem Flanschloch (9, 11) in der Umlaufrichtung des Flanschlochkreises (L) nächstfolgenden Flanschlöchern (8, 7, 6; 10, 9, 8) einerseits und dem Mittelpunkt des Flanschlochkreises (L) andrerseits innerhalb des Flanschlochkreises (L) hindruch verläuft, ihn dann schneidet und nachher ausserhalb des Flanschlochkreises (L) zur Felge verläuft.

2. Drahtspeichenrad nach Anspruch 1, dadurch gekennzeichnet, dass an beiden Nabenflanschen sämtliche Drahtspeichen in ihre Innenseiten gesteckt sind, sodass sie aus deren Aussenseiten herauskommen.

3. Drahtspeichenrad nach Anspruch 1, dadurch gekennzeichnet, dass an beiden Nabenflanschen sämtliche Drahtspeichen in ihre Aussenseiten gesteckt sind, sodass sie aus deren Innenseiten herauskommen.

4. Drahtspeichenrad nach Anspruch 1, dadurch gekennzeichnet, dass sämtliche Drahtspeichen am einen Nabenflansch in dessen Innenseite gesteckt sind, sodass sie aus dessen Aussenseite herauskommen, und sämtliche Drahtspeichen am anderen Nabenflansch in dessen Aussenseite gesteckt sind, sodass sie aus dessen Innenseite herauskommen.

5. Drahtspeichenrad nach Anspruch 1, dadurch gekennzeichnet, dass am einen Nabenflansch sämtliche Drahtspeichen in dessen Innenseite gesteckt sind, sodass sie aus dessen Aussenseite herauskommen, und dass der andere Nabenflansch ein beliebiges konventionelles Speichenspannsystem aufweist.

6. Drahtspeichenrad nach Anspruch 1, dadurch gekennzeichnet, dass am einen Nabenflansch sämtliche Draht speichen in dessen Aussenseite gesteckt sind, sodass sie aus dessen Innenseite herauskommen, und dass der andere Nabenflansch ein beliebiges konventionelles Speichenspannsystem aufweist.

7. Verwendung eines Drahtspeichenrades nach einem der Ansprüche 1 bis 6 als Lauf- oder Antriebsrad an einspurigen oder mehrspurigen Fahrzeugen, insbesondere an Fahrrädern.

Fig.1

Fig.2

Fig.3

Fig.4

*Fig. 5*

*Fig. 6*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 569 933  (LAPORTE)<br>* Insgesamt *<br>--- | 1 | B 60 B    1/04<br>B 60 B    1/14 |
| A | US-A-4 275 931  (REPPERT)<br>* Spalte 1, Zeile 64 - Spalte 2, Zeile 18; Figuren 1,2 *<br>----- | 1 | |

RECHERCHIERTE
SACHGEBIETE (Int. Cl.4)

B 60 B

Der vorliegende Recherchenbericht wurde für alle Patentansprüche erstellt

| Recherchenort | Abschlußdatum der Recherche | Prüfer |
|---|---|---|
| DEN HAAG | 21-12-1988 | FOGLIA A. |